# EUROPEAN PATENT APPLICATION

(11) **EP 2 369 488 A1**
(43) Date of publication of application: **28.09.2011**
(21) Application number: 09832877.6
(22) Date of filing: 10.10.2009
(51) Int. Cl.: G06F 11/30

(54) **METHOD, DEVICE AND SYSTEM FOR IMPROVING RUNNING STABILITY OF SERIAL ATTACHED SMALL COMPUTER SYSTEM INTERFACE DOMAIN**

(30) Priority: 17.12.2008 CN 200810241626
(71) Applicant: Chengdu Huawei Symantec Technologies Co., Ltd., Sichuan 611731 (CN)
(72) Inventor: HU, Yu, Chengdu Sichuan 611731 (CN)
(74) Representative: Barth, Stephan Manuel
(86) International application number: PCT/CN2009/074395
(87) International publication number: WO 2010/069195

(57) **Abstract**

A method, an apparatus and a system for improving running stability of a Serial Attached Small Computer System Interface (SAS) domain are disclosed. The method includes: monitoring and recording the number of state changes of a SAS physical channel in the SAS domain within a preset time; and isolating the SAS physical channel that fulfills a preset isolation condition according to the number of state changes. The method improves the running stability of the SAS domain.

## Description

This application claims priority to Chinese Patent Application No. 200810241626.6, filed with the Chinese Patent Office on December 17, 2008 and entitled "METHOD, APPARATUS AND SYSTEM FOR IMPROVING RUNNING STABILITY OF SAS DOMAIN", which is incorporated herein by reference in its entirety.

### FIELD OF THE INVENTION

The present invention relates to the communication field, and in particular, to a method and an apparatus for improving running stability of a Serial Attached Small Computer System Interface (SAS) domain, and a system that uses the apparatus.

### BACKGROUND OF THE INVENTION

The SAS uses the serial technology to obtain higher transmission speeds, and improves the internal space of the interface by shortening the connecting wires. The SAS interface is a new-generation serial point-to-point storage device interface of the enterprise class. The SAS interface makes the storage system application more flexible, and enables a user to select a SAS disk or a Serial Advanced Technology Attachment (SATA) disk as required. Therefore, the SAS interface increases flexibility of expanding the storage system, and maximizes cost-efficiency of the storage device. A SAS structure is highly scalable. Through a SAS expansion device (a component that facilitates communication between plenty of SAS devices, and includes at least two external interfaces), up to 16,384 disk devices can be connected. A set of SAS devices which communicate through a service transmission subsystem is called a SAS domain, and the channel for connecting a SAS device with the SAS expansion device is called a SAS physical channel.

In the process of implementing the present invention, the inventor finds that in the prior art, the request sent by each host to a destination device and the response returned by the destination device are transmitted through a point-to-point connection on a specific physical channel in the case that the storage device is connected with the SAS. When the state of a SAS physical channel changes, the transmission of data on all SAS physical channels in the whole SAS domain stops, the performance is deteriorated seriously, and even the system is crashed. The SAS physical channels in the SAS domain cannot resume the normal data transmission until the recovery of the system is completed, which affects the running stability of the system.

### SUMMARY OF THE INVENTION

The embodiments of the present invention provide a method, an apparatus, and a system for improving running stability of a SAS domain to improve the running stability of the SAS domain.

One aspect of the present invention is to provide a method for improving running stability of a SAS domain. The method includes: monitoring and recording the number of state changes of a SAS physical channel in the SAS domain within a preset time; and isolating the SAS physical channel that fulfills a preset isolation condition according to the number of state changes.

Another aspect of the present invention is to provide an apparatus for improving running stability of a SAS domain. The apparatus includes: a monitoring and recording module, adapted to monitor and record the number of state changes of a SAS physical channel in the SAS domain within a preset time; and an isolating module, adapted to isolate the SAS physical channel that fulfills a preset isolation condition according to a monitoring result of the monitoring and recording module.

Another aspect of the present invention is to provide a storage system. The storage system includes: a storage apparatus, adapted to store data through at least two storage devices included in the storage apparatus, where the storage devices are connected through a SAS physical channel; and a stabilizing apparatus, adapted to monitor and record the number of state changes of the SAS physical channel in the storage apparatus, and isolate the SAS physical channel that fulfills a preset isolation condition according to the number of state changes.

In the technical solution under the present invention, the state changes of the SAS physical channel in the SAS domain are monitored and recorded; the SAS physical channel which fulfills a specific condition within a preset time is regarded as faulty and is isolated, thus ensuring other SAS physical channels to transmit data normally and improving the running stability of the whole SAS domain.

### BRIEF DESCRIPTION OF THE DRAWINGS

To make the technical solution under the present invention clearer, the following outlines the accompanying drawings involved in the description of the embodiments of the present invention. Apparently, the accompanying drawings outlined below are exemplary only and are not exhaustive, and persons of ordinary skill in the art can derive other drawings from such accompanying drawings without any creative effort.
FIG. 1 is a flowchart of a method for improving running stability of a SAS domain in a first embodiment of the present invention;
FIG. 2 is a flowchart of a method for improving running stability of a SAS domain in a second embodiment of the present invention;
FIG. 3 is a flowchart of a method for improving running stability of a SAS domain in a third embodiment of the present invention;
FIG. 4 shows a structure of an apparatus for improving running stability of a SAS domain in a fourth embodiment of the present invention;
FIG. 5 shows a structure of an apparatus for improving running stability of a SAS domain in a fifth embodiment of the present invention;
FIG. 6 shows a structure of an apparatus for improving running stability of a SAS domain in a sixth embodiment of the present invention; and
FIG. 7 shows a structure of a storage system provided in a seventh embodiment of the present invention.

### DETAILED DESCRIPTION OF THE EMBODIMENTS

The technical solution under the present invention is expounded below with reference to embodiments and accompanying drawings. Evidently, the embodiments described below are exemplary only and not exhaustive or restrictive. All other embodiments, which can be derived by those skilled in the art from the embodiments given herein without any creative effort, fall within the scope of the present invention.

It should be noted that in the SAS domain, at least one SAS expansion device exists. The SAS expansion device includes a SAS expansion chip. In the SAS expansion chip, a control register for controlling the SAS physical channel is set for each SAS physical channel, and a register (monitoring register) is set for monitoring the state change of the SAS physical channel.

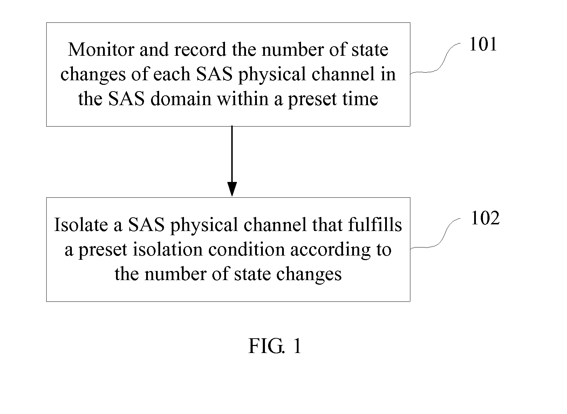

FIG. 1 is a flowchart of a method for improving running stability of a SAS domain in the first embodiment of the present invention. As shown in FIG. 1, the method includes the following steps:
Step 101: Monitor and record the number of state changes of the SAS physical channel in the SAS domain within a preset time.

The preset time is a time period for monitoring and recording the number of state changes of the SAS physical channel. The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

Step 102: Isolate the SAS physical channel that fulfills a preset isolation condition according to the number of state changes.

The isolation condition may be determined according to the device performance or the actual use conditions. If the number of state changes of a SAS physical channel within a preset time is greater than (or, greater than or equal to) a threshold, the SAS physical channel is regarded as faulty and needs to be isolated. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel is regarded as faulty and needs to be isolated. The isolation method may be: change the value of the control register corresponding to the SAS physical channel to disable the SAS physical channel and thus isolate the SAS physical channel.

In the foregoing technical solution, the number of state changes of the SAS physical channel in the SAS domain within a preset time is monitored and recorded; if the number of state changes of a SAS physical channel fulfills the isolation condition, the SAS physical channel is regarded as faulty and is isolated in time, thus ensuring other SAS physical channels to transmit data normally without being affected by the faulty SAS physical channel, and improving running stability of the whole SAS domain.

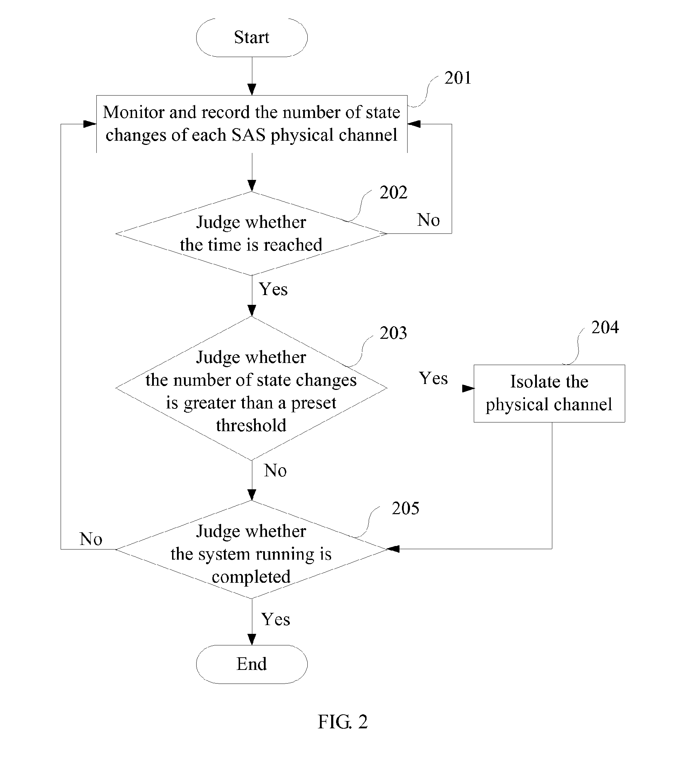

FIG. 2 is a flowchart of a method for improving running stability of a SAS domain in the second embodiment of the present invention. As shown in FIG. 2, the method includes the following steps:
Step 201: Monitor and record the number of state changes of the SAS physical channel and proceed to step 202.

The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

Step 202: Judge whether the preset time expires. If the preset time expires, proceed to step 203; if not, continue with step 201 to monitor and record the number of state changes of the SAS physical channel.

The preset time is a time period for monitoring and recording the number of state changes of the SAS physical channel, and is a time condition for judging whether the SAS physical channel is faulty.

Step 203: Judge whether the number of state changes of the SAS physical channel is greater than the preset threshold. If so, proceed to step 204; if not, proceed to step 205.

The isolation condition illustrated in this embodiment is: The number of state changes of the SAS physical channel within the preset time is greater than the preset threshold. The isolation condition may also be: If the number of state changes of a SAS physical channel within the preset time is greater than or equal to the threshold, the SAS physical channel is regarded as faulty and needs to be isolated. The preset time and the threshold may be determined according to the device performance or the actual use conditions. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel fulfills the isolation condition and needs to be isolated.

Step 204: Isolate the SAS physical channel and proceed to step 205.

The isolation method may be: change the value of the control register corresponding to the SAS physical channel to disable the SAS physical channel and thus isolate the SAS physical channel.

Step 205: Judge whether the system running is completed. If so, end the procedure; if not, continue with step 201 to monitor and record the number of state changes of the SAS physical channel.

In the foregoing technical solution, the number of state changes of the SAS physical channel in the SAS domain within a preset time is monitored and recorded; and the isolation condition is set according to the number of state changes of the SAS physical channel; the SAS physical channel that fulfills the isolation condition is regarded as faulty and is isolated in time, thus ensuring other SAS physical channels to transmit data normally without being affected by the faulty SAS physical channel, and ensuring stable running of the whole SAS domain.

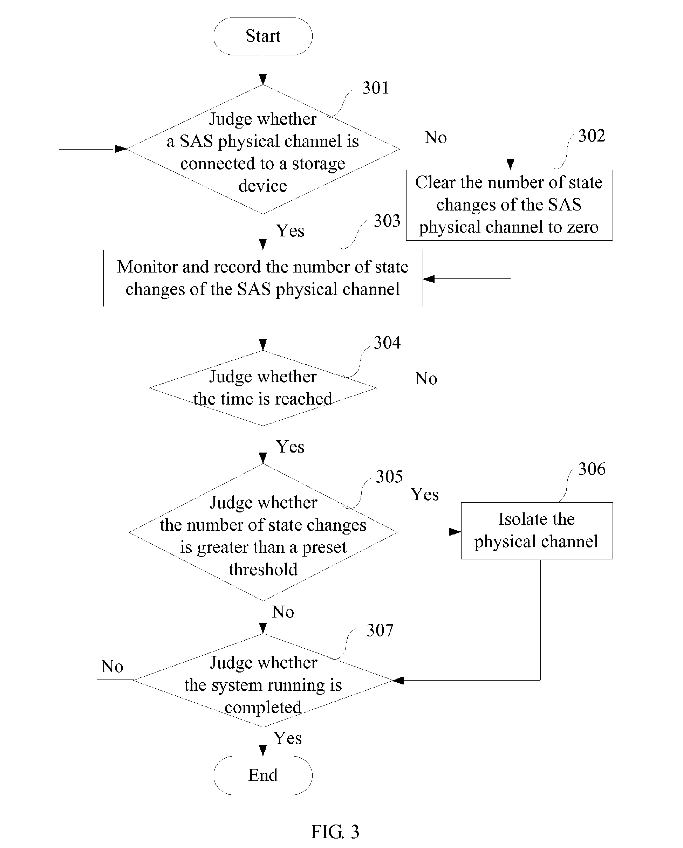

FIG. 3 is a flowchart of a method for improving running stability of a SAS domain in the third embodiment of the present invention. As shown in FIG. 3, the method includes the following steps:
Step 301: Judge whether the SAS physical channel in the SAS domain is connected with a storage device. If so, proceed to step 303; if not, proceed to step 302.

The judgment about whether the SAS physical channel is connected with a storage device is based on the register preset in the SAS expansion device in the SAS domain. The register monitors whether the corresponding physical channel is connected with a storage device. The storage device may be a hard disk device or a concatenated SAS expansion device.

Step 302: Clear the number of state changes of the SAS physical channel to zero and proceed to step 303.

The number of state changes of the SAS physical channel is cleared to zero so that the SAS physical channel will not be mistakenly regarded as faulty or mistakenly isolated when somebody inserts and removes the storage device such as a hard disk or a concatenated SAS expansion device repeatedly which makes the SAS physical channel disconnected from the storage device.

Step 303: Monitor and record the number of state changes of the SAS physical channel and proceed to step 304.

The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

Step 304: Judge whether the preset time expires. If the preset time expires, proceed to step 305; if not, continue with step 303 to monitor and record the number of state changes of the SAS physical channel.

The preset time is a time period for monitoring and recording the number of state changes of the SAS physical channel, and is a time condition for judging whether the SAS physical channel is faulty.

Step 305: Judge whether the number of state changes of the SAS physical channel is greater than the preset threshold. If so, proceed to step 306; if not, proceed to step 307.

The isolation condition illustrated in this embodiment is: The number of state changes of the SAS physical channel within the preset time is greater than the preset threshold. The isolation condition may also be: If the number of state changes of a SAS physical channel within the preset time is greater than or equal to the threshold, the SAS physical channel is regarded as faulty and needs to be isolated. The preset time and the threshold may be determined according to the device performance or the actual use conditions. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel fulfills the isolation condition and needs to be isolated.

Step 306: Isolate the SAS physical channel and proceed to step 307.

The isolation method may be: change the value of the control register corresponding to the SAS physical channel to disable the SAS physical channel and thus isolate the SAS physical channel.

Step 307: Judge whether the system running is completed. If so, end the procedure; if not, continue with step S301.

In the method provided in the third embodiment, to improve accuracy of isolating the SAS physical channel, a register is preset in the SAS expansion device to monitor whether the SAS physical channel is connected with a storage device. If the SAS physical channel is connected with no storage device, the number of state changes of the SAS physical channel is cleared to zero so that the SAS physical channel will not be mistakenly regarded as faulty or mistakenly isolated when somebody inserts and removes the storage device such as a hard disk or a concatenated SAS expansion device repeatedly, thus improving accuracy of isolating the SAS physical channel, ensuring other SAS physical channels to transmit data normally without being affected by the faulty SAS physical channel, and ensuring stable running of the whole SAS domain.

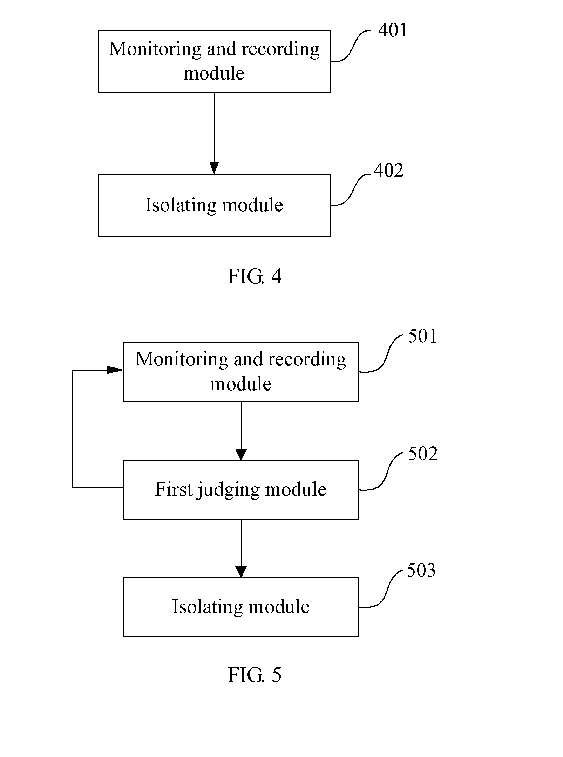

FIG. 4 shows a structure of an apparatus for improving running stability of a SAS domain in the fourth embodiment of the present invention. As shown in FIG. 4, the apparatus includes a monitoring and recording module 401 and an isolating module 402.

The monitoring and recording module 401 is adapted to monitor and record the number of state changes of the SAS physical channel in the SAS domain within a preset time.

The preset time is a time period for monitoring and recording the number of state changes of the SAS physical channel. The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

The isolating module 402 is adapted to isolate the SAS physical channel that fulfills a preset isolation condition according to a monitoring and recording result of the monitoring and recording module 401.

The isolation condition is set according to the device performance or the actual use conditions. The isolation condition may be: If the number of state changes of a SAS physical channel within a preset time is greater than (or, greater than or equal to) a threshold, the SAS physical channel is regarded as faulty and needs to be isolated. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel is regarded as faulty and needs to be isolated. The isolating module 402 may change the value of the control register corresponding to the SAS physical channel to disable the SAS physical channel and thus isolate the SAS physical channel.

In the technical solution provided in the fourth embodiment, the monitoring and recording module 401 monitors and records the number of state changes of the SAS physical channel in the SAS domain within a preset time; if the number of state changes of a SAS physical channel fulfills the preset isolation condition, the SAS physical channel is regarded as faulty and is isolated by the isolating module 402 in time, thus ensuring other SAS physical channels to transmit data normally without being affected by the faulty SAS physical channel, and ensuring stable running of the whole SAS domain.

FIG. 5 shows a structure of an apparatus for improving running stability of a SAS domain in the fifth embodiment of the present invention. As shown in FIG. 5, the apparatus includes a monitoring and recording module 501, a first judging module 502, and an isolating module 503.

The monitoring and recording module 501 is adapted to monitor and record the number of state changes of the SAS physical channel.

The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

The first judging module 502 is adapted to: judge whether the state change of the SAS physical channel monitored by the monitoring and recording module 501 fulfills the preset isolation condition, and trigger the isolating module 503 if the isolation condition is fulfilled or trigger the monitoring and recording module 501 if the isolation condition is not fulfilled.

The isolation condition is set according to the device performance and the actual use conditions. The isolation condition may be: If the number of state changes of a SAS physical channel within a preset time is greater than (or, greater than or equal to) a threshold, the SAS physical channel is regarded as faulty and needs to be isolated. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel is regarded as faulty and the isolating module 503 is triggered.

The isolating module 503 is adapted to isolate the SAS physical channel determined by the first judging module 502 as fulfilling the isolation condition.

The isolating module 503 may change the value of the control register corresponding to the SAS physical channel to disable the SAS physical channel and thus isolate the SAS physical channel.

In the apparatus provided in the fifth embodiment, the monitoring and recording module 501 monitors and records the number of state changes of the SAS physical channel in the SAS domain within a preset time; the first judging module 502 judges whether the state change of the SAS physical channel monitored by the monitoring and recording module 501 fulfills the preset isolation condition; and the isolating module 503 isolates the SAS physical channel that fulfills the isolation condition, thus ensuring other SAS physical channels to transmit data normally without being affected by the faulty SAS physical channel, and improving running stability of the whole SAS domain.

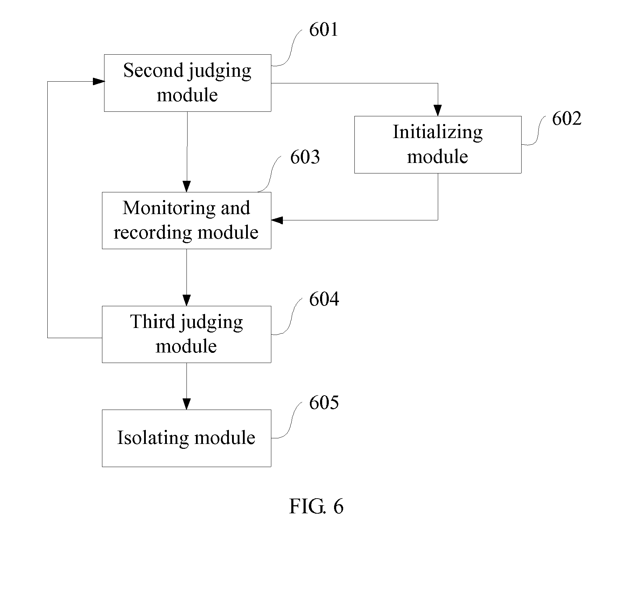

FIG. 6 shows a structure of an apparatus for improving running stability of a SAS domain in the sixth embodiment of the present invention. As shown in FIG. 6, the apparatus includes a second judging module 601, an initializing module 602, a monitoring and recording module 603, a third judging module 604, and an isolating module 605.

The second judging module 601 is adapted to: judge whether the SAS physical channel in the SAS domain is connected with a storage device, and trigger the monitoring and recording module 603 if the SAS physical channel is connected with a storage device or trigger the initializing module 602 if the SAS physical channel is connected with no storage device.

The judgment about whether the SAS physical channel is connected with a storage device is based on the register preset in the SAS expansion device in the SAS domain. The register monitors whether the corresponding physical channel is connected with a storage device. The storage device may be a hard disk device or a concatenated SAS expansion device.

The initializing module 602 is adapted to clear the number of state changes of the SAS physical channel to zero, and trigger the monitoring and recording module 603.

The number of state changes of the SAS physical channel is cleared to zero so that the SAS physical channel will not be mistakenly regarded as faulty or mistakenly isolated when somebody inserts and removes the storage device such as a hard disk or a concatenated SAS expansion device repeatedly which makes the SAS physical channel disconnected from the storage device.

The monitoring and recording module 603 is adapted to monitor and record the number of state changes of the SAS physical channel, and trigger the third judging module 604.

The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

The third judging module 604 is adapted to: judge whether the state change of the SAS physical channel fulfills the isolation condition according to the recording result of the monitoring and recording module 603, and trigger the isolating module 605 if the isolation condition is fulfilled or trigger the second judging module 601 if the isolation condition is not fulfilled.

The isolation condition is set according to the device performance and the actual use conditions. The isolation condition may be: If the number of state changes of a SAS physical channel within a preset time is greater than (or, greater than or equal to) a threshold, the SAS physical channel is regarded as faulty and needs to be isolated. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel is regarded as faulty and the isolating module 605 is triggered.

The isolating module 605 is adapted to isolate the SAS physical channel determined by the third judging module 604 as fulfilling the isolation condition.

The isolating module 605 may change the value of the control register corresponding to the SAS physical channel to disable the SAS physical channel and thus isolate the SAS physical channel.

In the apparatus for improving the running stability of the SAS domain in the sixth embodiment, the second judging module 601 judges whether the SAS physical channel in the SAS domain is connected with a storage device; the initializing module 602 clears the number of state changes of the SAS physical channel connected with no storage device, and triggers the monitoring and recording module; and the SAS physical channel that fulfills the isolation condition is isolated. In this way, the accuracy of isolating the SAS physical channel is improved, and the SAS physical channel will not be mistakenly regarded as faulty or mistakenly isolated when somebody inserts and removes the storage device repeatedly which makes the SAS physical channel disconnected from the storage device. Thus the running stability of the whole SAS domain is improved.

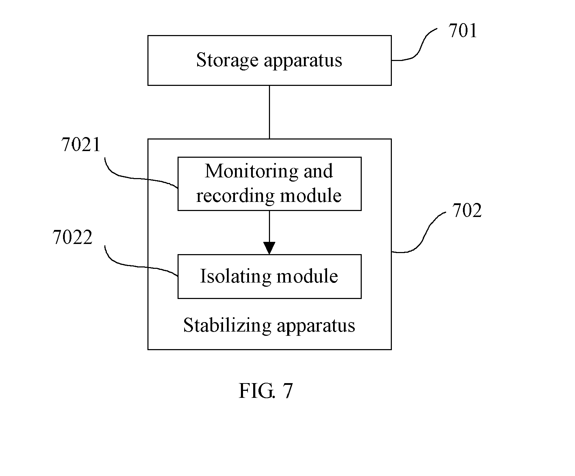

FIG. 7 shows a structure of a storage system provided in the seventh embodiment of the present invention. As shown in FIG. 7, the storage system includes:
a storage apparatus 701, adapted to store data through at least two storage devices included in the storage apparatus, where the storage devices are connected through the SAS physical channel; and
a stabilizing apparatus 702, adapted to monitor and record the number of state changes of the SAS physical channel in the storage apparatus 701, and isolate the SAS physical channel that fulfills a preset isolation condition according to the number of state changes.

The stabilizing apparatus 702 includes a monitoring and recording module 7021 and an isolating module 7022.

The monitoring and recording module 7021 is adapted to monitor and record the number of state changes of the SAS physical channel in the SAS domain within a preset time.

The preset time is a time period for monitoring and recording the number of state changes of the SAS physical channel. The number of state changes of the SAS physical channel may be obtained by reading values of the monitoring register corresponding to the SAS physical channel. The monitoring register stores the absolute number of state changes of the SAS physical channel, and the number of state changes of the SAS physical channel may be obtained according to the difference of the absolute number between two adjacent state changes of the SAS physical channel.

The isolating module 7022 is adapted to isolate the SAS physical channel that fulfills a preset isolation condition according to a monitoring and recording result of the monitoring and recording module 7021.

The isolation condition is set according to the device performance or the actual use conditions. The isolation condition may be: If the number of state changes of a SAS physical channel within a preset time is greater than (or, greater than or equal to) a threshold, the SAS physical channel is regarded as faulty and needs to be isolated. For example, the preset time is 60s, the preset threshold is 3, and the isolation condition is that the number of state changes within 60s is greater than or equal to 3. That is, if the number of state changes of a SAS physical channel within 60s is greater than or equal to 3, the SAS physical channel is regarded as faulty and needs to be isolated. The isolating module 7022 may change the value of the control register corresponding to the SAS physical channel to disable the SAS physical channel and thus isolate the SAS physical channel.

In the storage system provided in the seventh embodiment, the stabilizing apparatus is used to enable stable running of the storage apparatus; the monitoring and recording module of the stabilizing apparatus monitors and records the number of state changes of the SAS physical channel connected with a storage device in the storage apparatus within a preset time, and judges whether the SAS physical channel is faulty according to the number of state changes of the SAS physical channel; the isolating module isolates the faulty SAS physical channel, thus ensuring other SAS physical channels to transmit data normally without being affected by the faulty SAS physical channel, and improving running stability of the whole storage system.

It should be noted that the first judging module, the second judging module, and the third judging module in the embodiments of the present invention are only names for identifying the modules, and do not represent the order of the modules or restrict the functions of the modules.

Persons of ordinary skill in the art should understand that all or part of the steps of the method under the present invention may be implemented by a program instructing relevant hardware. The program may be stored in a computer readable storage medium. When the program runs, the steps of the method provided in any of the embodiments above can be performed. The storage medium may be a magnetic disk, a Compact Disk-Read Only Memory (CD-ROM), a Read Only Memory (ROM) or a Random Access Memory (RAM).

Although the invention is described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A method for improving running stability of a Serial Attached Small Computer System Interface (SAS) domain, comprising:
monitoring and recording the number of state changes of a SAS physical channel in the SAS domain within a preset time; and
isolating the SAS physical channel that fulfills a preset isolation condition according to the number of state changes.

2. The method according to claim 1, wherein:
one method for isolating the SAS physical channel that fulfills the preset isolation condition according to the number of state changes is to change a value of a control register corresponding to the SAS physical channel.

3. The method according to claim 1, wherein:
the number of state changes of the SAS physical channel is obtained by reading values of a monitoring register corresponding to the SAS physical channel.

4. The method according to any of claims 1-3, further comprising:
judging whether the SAS physical channel is connected with a storage device, and clearing the number of state changes of the SAS physical channel connected with no storage device to zero.

5. An apparatus for improving running stability of a Serial Attached Small Computer System Interface (SAS) domain, comprising:
a monitoring and recording module, adapted to monitor and record the number of state changes of a SAS physical channel in the SAS domain within a preset time; and
an isolating module, adapted to isolate the SAS physical channel that fulfills a preset isolation condition according to a monitoring result of the monitoring and recording module.

6. The apparatus according to claim 5, wherein:
the monitoring and recording module obtains the number of state changes of the SAS physical channel by reading values of a monitoring register corresponding to the SAS physical channel.

7. The apparatus according to claim 5, wherein:
the isolating module isolates the SAS physical channel by changing a value of a control register corresponding to the SAS physical channel.

8. The apparatus according to any of claims 5-7, further comprising:
a first judging module, adapted to: judge whether the number of state changes of the SAS physical channel monitored by the monitoring and recording module fulfills the preset isolation condition, and trigger the isolating module if the isolation condition is fulfilled or trigger the monitoring and recording module if the isolation condition is not fulfilled.

9. The apparatus according to any of claims 5-7, further comprising:
a second judging module, adapted to: judge whether the SAS physical channel is connected with a storage device, and trigger the monitoring and recording module if the SAS physical channel is connected with a storage device or trigger an initializing module if the SAS physical channel is connected with no storage device;
the initializing module, adapted to clear the number of state changes of the SAS physical channel to zero, and trigger the monitoring and recording module; and
a third judging module, adapted to: judge whether a state change of the SAS physical channel fulfills the isolation condition according to a recording result of the monitoring and recording module, and trigger the isolating module if the isolation condition is fulfilled or trigger the second judging module if the isolation condition is not fulfilled.

10. A storage system, comprising:
a storage apparatus, adapted to store data through at least two storage devices comprised in the storage apparatus, wherein the storage devices are connected through a Serial Attached Small Computer System Interface (SAS) physical channel; and
a stabilizing apparatus, adapted to monitor and record the number of state changes of the SAS physical channel in the storage apparatus, and isolate the SAS physical channel that fulfills a preset isolation condition according to the number of state changes.

11. The storage system according to claim 10, wherein the stabilizing apparatus comprises:
a monitoring and recording module, adapted to monitor and record the number of state changes of the SAS physical channel in a SAS domain within a preset time; and
an isolating module is adapted to isolate the SAS physical channel that fulfills the preset isolation condition according to a monitoring and recording result of the monitoring and recording module.
